(19) Europäisches Patentamt
European Patent Office
Office européen des brevets

(11) EP 2 590 341 B1

(12) **FASCICULE DE BREVET EUROPEEN**

(45) Date de publication et mention
de la délivrance du brevet:
**25.02.2015 Bulletin 2015/09**

(51) Int Cl.:
***H04B 7/185*** (2006.01)

(21) Numéro de dépôt: **12190593.9**

(22) Date de dépôt: **30.10.2012**

(54) **Dispositif à bord d'un satellite pour recevoir des messages de surveillance d'aéronefs.**

Gerät an Bord eines Satelliten zum Empfang von Nachrichten zur Flugzeugüberwachung.

Device on board of a satellite for receiving aircraft surveillance messages.

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.11.2011 FR 1103354**

(43) Date de publication de la demande:
**08.05.2013 Bulletin 2013/19**

(73) Titulaire: **Thales**
**92200 Neuilly Sur Seine (FR)**

(72) Inventeurs:
• **Barthère, Arnaud**
**31100 Toulouse (FR)**
• **Corbel, Erwan**
**31270 Villeneuve Tolosane (FR)**
• **Calmettes, Thibaud**
**31400 Toulouse (FR)**

(74) Mandataire: **Delaval, Guillaume Laurent et al**
**Marks & Clerk France**
**Immeuble Visium**
**22, avenue Aristide Briand**
**94117 Arcueil Cedex (FR)**

(56) Documents cités:
**EP-A1- 2 296 128      EP-A2- 1 223 691**
**WO-A1-03/032525      US-A1- 2006 035 588**

**Description**

L'invention concerne un système de surveillance par satellite multi-spots et dispositif de réception. Elle s'applique notamment aux domaines de la surveillance et du contrôle d'aéronefs.

Comme décrit par exemple dans le document EP 2296128, les systèmes de surveillance et de contrôle de trafic aérien exploitent aujourd'hui les possibilités offertes par les systèmes de positionnement par satellite GNSS, acronyme venant de l'expression anglo-saxonne «Global Navigation Satellite System», comme par exemple les systèmes GALILEO, GLONASS et GPS. Les aéronefs à surveiller et à contrôler comprennent habituellement des moyens embarqués leur permettant d'évaluer finement leur position en s'appuyant sur ces systèmes de positionnement. Les aéronefs envoient ensuite régulièrement le résultat de leur estimation de position par radio à des stations de contrôle au sol. Le système ADS-B, acronyme venant de l'expression anglo-saxonne « Automatic Dependent Surveillance-Broadcast », est un exemple de norme pour système de surveillance.

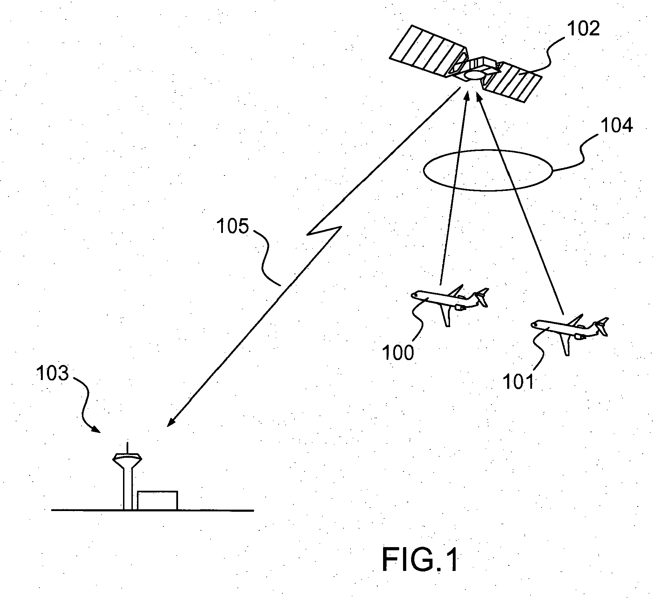

Les stations terrestres ne sont pas toujours en visibilité radio avec un aéronef diffusant sa position, par exemple lorsque celui-ci se déplace au dessus d'un océan. La mise en oeuvre de satellites ayant des capacités de réception et d'émission de signaux de surveillance s'est alors posée aux industriels du secteur du fait qu'un satellite permet de couvrir une zone étendue de par leur altitude et leur ouverture d'antenne pouvant être supérieure à 126° à 780 km d'altitude. La mise en oeuvre d'un satellite aurait alors l'avantage d'améliorer la réception des messages de surveillance de type ADS-B et donc de permettre un contrôle plus fin des aéronefs. Dans un tel système, et comme illustré grâce à la figure 1, une pluralité d'aéronefs 100, 101 transmettent des informations comme par exemple leur position à un satellite 102 couvrant la zone dans laquelle ils se trouvent. Cette transmission est réalisée en utilisant un lien montant de communication 104. Le satellite 102 retransmet ensuite cette information vers au moins une station au sol 103 en utilisant un lien descendant 105.

L'utilisation de satellites dans un système de surveillance et de contrôle de trafic aérien induit plusieurs problèmes. Un premier problème est dû au fait que les aéronefs émettent des signaux de surveillance de manière asynchrone et sur une même bande de fréquence. Lorsque le nombre d'aéronefs présents dans la zone de visibilité du satellite devient très élevé, la probabilité de collision de message augmente rapidement et peut devenir rédhibitoire. Une collision de signaux se produit lorsque deux aéronefs émettent en même temps et voient leurs messages mutuellement brouillés. De plus, une solution se basant sur un satellite couvrant une zone donnée à l'aide d'un unique spot est incompatible avec un bilan de liaison acceptable, c'est-à-dire avec un facteur de mérite suffisant. Pour rappel, le facteur correspond au rapport G/T entre le gain d'antenne G et la température T. En outre, le dispositif de réception embarqué dans le satellite se trouvera facilement en situation de saturation car le nombre d'avions en visibilité est trop important.

Il est aussi possible d'envisager une solution multi-spots, un satellite émettant et recevant simultanément dans sa zone de couverture à l'aide d'un nombre M de spots. Or, cette solution suppose de mettre en oeuvre dans le satellite autant de chaînes de réception que de spots. Il peut alors être difficile, voir impossible, d'embarquer un tel récepteur dans la charge utile d'un satellite du fait de sa taille, de son volume, du nombre d'équipements, de la puissance consommée ainsi que du poids du dispositif de réception.

Un but de l'invention est notamment de pallier les inconvénients précités.

A cet effet l'invention a pour un système de surveillance d'aéronefs présents dans une zone couverte par au moins un satellite de communication, lesdits aéronefs émettant des signaux portant des messages de surveillance. La zone de couverture est composée d'une pluralité de spots, le satellite comprenant des moyens pour appliquer périodiquement une séquence de commutation, ladite séquence étant composée d'une pluralité de phases de commutation, une phase de commutation correspondant à une durée pendant laquelle les signaux émis par les aéronefs présents dans au moins un spot sont traités par le satellite de manière à détecter des messages de surveillance, ladite séquence étant adaptée de manière à permettre la détection pendant une période prédéterminée *Tup* d'au moins un message de surveillance par aéronef présent dans la zone de couverture.

Selon un aspect de l'invention, la norme ADS-B est mise en oeuvre.

La séquence de commutation comprend par exemple au moins deux phases de commutation de durées différentes.

Dans un mode de réalisation, la séquence de commutation est adaptée automatiquement et/ou sur commande en fonction de la densité des aéronefs présents dans les spots de la zone de couverture.

La durée des phases de commutation et/ou le nombre de spots traités durant chaque phase peuvent être choisis en fonction de la densité des aéronefs présents dans les spots de la zone de couverture.

Selon un aspect de l'invention, le satellite comprend des moyens de détection multi-utilisateurs MUD par suppression d'interférence, la contribution au signal reçu dans un spot d'un message détecté étant retranchée aux signaux reçus dans les spots adjacents traités pendant la même phase de commutation.

Dans un mode de réalisation, le satellite comprend une pluralité d'antennes de réception, deux antennes utilisées pour recevoir des signaux en provenance de deux spots adjacents étant configurées de manière à ce que la première fonctionne en polarisation circulaire droite et la seconde en polarisation circulaire gauche.

Alternativement, le satellite comprend une pluralité d'antennes de réception, au moins une antenne étant configurée de manière à ce qu'elle fonctionne à la fois en polarisation circulaire droite et en polarisation circulaire gauche.

L'invention a aussi pour objet un dispositif de réception pouvant être embarqué dans un satellite comprenant des moyens pour former une pluralité de faisceaux de réception, un faisceau de réception correspondant à un spot, l'ensemble des spots formant une zone de couverture, au moins un module de réception comportant des moyens pour détecter des messages de surveillance à partir d'un faisceau de réception. Le dispositif comprend en outre des moyens pour mettre en oeuvre périodiquement une séquence de commutation, ladite séquence étant composée d'une pluralité de phases de commutation, une phase de commutation correspondant à une durée pendant laquelle les signaux émis par des aéronefs présents dans au moins un spot sont traités de manière à détecter des messages de surveillance, ladite séquence étant adaptée de manière à permettre la détection pendant une période prédéterminée $Tup$ d'au moins un message de surveillance par un aéronef présent dans la zone de couverture.

Selon un aspect de l'invention, le dispositif de réception comprend au moins deux modules de réception.

Dans un mode de réalisation, lorsqu'un module de réception est hors service, le temps d'écoute $Tec$ par faisceau correspondant au temps alloué à la détection de messages de surveillance pendant une application de la séquence de commutation est proportionnellement diminué.

Dans un autre mode de réalisation, lorsque l'un des faisceaux est défaillant, la séquence de commutation est adaptée de manière à ce que le temps d'écoute par faisceau soit augmenté pour les faisceaux restants.

Selon un aspect de l'invention, le temps d'écoute par faisceau est augmenté de manière plus significative pour les spots adjacents au faisceau défaillant que pour les autres.

D'autres caractéristiques et avantages de l'invention apparaîtront à l'aide de la description qui suit donnée à titre illustratif et non limitatif, faite en regard des dessins annexés parmi lesquels :

- la figure 1 illustre le principe d'un système de surveillance d'aéronefs par satellite ;
- la figure 2 donne un exemple de dispositif de réception mettant en oeuvre la technique de commutation de faisceaux ;
- la figure 3a donne un exemple de zone pouvant être couverte par un satellite multi-spots mettant en oeuvre une séquence de commutation de faisceaux irrégulière ;
- la figure 3b donne un exemple de séquence de commutation irrégulière ;
- la figure 4 illustre la manière dont une séquence de commutation peut être adaptée automatiquement et/ou sur commande de manière à prendre en compte une défaillance d'un ou plusieurs modules de réception ;
- la figure 5 illustre comment des techniques de détection multi-utilisateurs peuvent être utilisées dans le cadre de l'invention

L'invention permet de bénéficier des avantages d'une solution multi-spots, notamment d'un meilleur facteur de mérite du système et d'un nombre d'aéronefs par spot réduit, ce qui minimise la probabilité de collision des messages.

Un des principes de l'invention est d'utiliser la technique de commutation de faisceaux permettant de bénéficier des avantages d'un système multi-spots tout en réduisant la complexité, la masse, la consommation et le coût du dispositif de réception embarqué dans le satellite et par conséquence de la charge utile dudit satellite. Avantageusement, la technique de commutation de faisceaux s'appuie sur les caractéristiques des transmissions répétitives asynchrones habituellement utilisées par les systèmes de surveillance, comme par exemple les systèmes mettant en oeuvre la norme ADS-B.

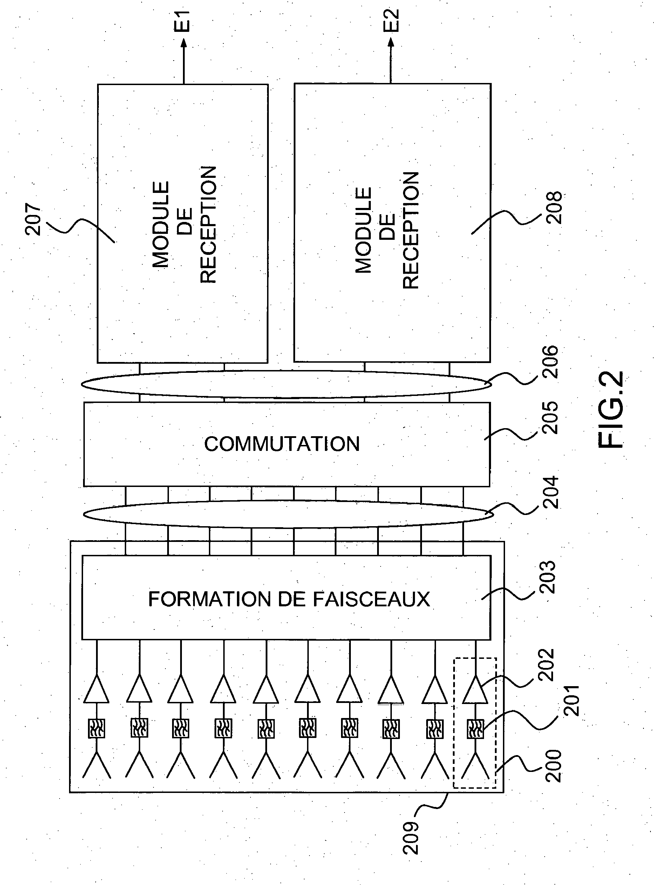

La figure 2 donne un exemple de dispositif de réception mettant en oeuvre la technique de commutation de faisceaux. Dans cet exemple, le dispositif comprend dix antennes 200, une antenne étant comprise dans une chaîne de traitement d'antennes 209 composée d'un filtre d'entrée 201 ainsi que d'un amplificateur faible bruit 202. Les signaux en sortie des amplificateurs peuvent être traités par un équipement de formation de faisceaux 203 permettant d'obtenir en sortie un ensemble de N faisceaux 204, un faisceau correspondant à un spot de réception. Les N faisceaux 204 sont ensuite traités par un équipement de commutation 205 contrôlé par exemple par une matrice de commutation mettant en oeuvre une séquence de commutation de faisceaux. En sortie de cet équipement 205, M signaux 206 sont générés afin de servir d'entrées à au moins un module de réception. Dans cet exemple, deux modules de réception sont représentés 207, 208. Un module de réception a pour fonction de traiter des signaux d'entrées correspondant à au moins un faisceau. Il comprend des moyens de traitement radiofréquence et des moyens de traitement numérique. Ces moyens de traitement numérique correspondent par exemple à des moyens de démodulation. Les moyens de traitement numérique peuvent comprendre également un codeur et/ou un décodeur de canal et/ou un traitement spécifique liée à la norme de surveillance considérée. En sortie des modules de réception 207, 208 des données E1, E2 correspondant à des messages de surveillance correctement détectés sont transmises vers un ou plusieurs équipement embarqués dans le satellite et ayant pour objectif de retransmettre ces messages vers au moins une station sol. Ainsi, le satellite joue un rôle de répéteur de signaux émis par une pluralité de sources réparties sur sa zone de couverture vers au moins une station au sol, ladite zone de couverture comprenant une pluralité de spots.

La technique de commutation de faisceaux ainsi mise en oeuvre permet de limiter les ressources de traitements radiofréquences et numériques. En effet, la mise en oeuvre d'une pluralité de spots ne requiert pas dans ce cas la mise en oeuvre d'une chaîne de réception complète pour chaque faisceau. En d'autres termes, le nombre de modules de réception 207, 208 peut être réduit car il n'est pas nécessaire d'avoir un module de réception pour chaque faisceau à traiter.

Les transmissions des messages de surveillance sont habituellement répétitives et asynchrones et permettent la mise en oeuvre d'une commutation de faisceaux. Ces transmissions sont répétitives car un même message de surveillance est émis plusieurs fois. Ces transmissions sont asynchrones car la répétition des messages de surveillance ne se produit pas à intervalle régulier. Dans la suite de la description, l'exemple du système ADS-B est utilisé afin de décrire plusieurs modes de réalisation de l'invention.

Dans un système ADS-B, ces transmissions sont répétitives et asynchrones et effectuées à une fréquence moyenne d'environ 2 Hz pour les informations liées à la position de l'aéronef. Il est donc inutile pour un satellite répéteur d'écouter un aéronef en permanence.

En outre, les messages ainsi transmis sont d'une durée très faible, cette durée étant de 120 $\mu$s dans le cas des signaux ADS-B.

La commutation de faisceaux doit être compatible avec les spécifications liées à la norme utilisée. Dans le cadre de l'ADS-B, il peut être requis qu'au moins une transmission de message de surveillance soit réalisée avec succès toutes les périodes $Tup$= 30 $s$ par exemple, cette valeur dépendant de l'exigence en terme de séparation spatiale entre aéronefs sur la route aérienne empruntée.

Une séquence de commutation peut être mise en oeuvre par exemple de la manière suivante. Dans le cadre de la norme ADS-B, la durée de répétition maximale d'un message de surveillance est de 0.6 seconde. Il en résulte qu'un message confirmé requiert un temps d'écoute minimum de $Tec$ = 1.2 $s$. En effet, un message confirmé est un message reçu par une station au sol et donc le contenu est confirmé par une seconde réception du même message. Ce temps $Tec$ peut être choisi comme étant la durée minimale d'écoute d'un avion que doit respecter la séquence de commutation.

Dans un autre mode de réalisation, la durée minimale d'écoute peut être choisie de manière à ce qu'elle soit supérieure à la durée d'une message de surveillance, soit $Tec \geq 120$ $\mu s$ dans le cas des signaux ADS-B

Si $Tec$ = 1.2 $s$, le nombre maximum de spots $Ns$, pouvant être mis en oeuvre en utilisant un unique module de réception est donc égal à $Ns = Tup/Tec$ = 30/12 = 25.

Les performances requises en termes de rapport G/T permettent de déterminer le nombre minimum de faisceaux permettant au système de fonctionner. La détermination du nombre minimum de faisceaux doit prendre en compte de préférence la saturation du dispositif de réception considéré. Ce nombre dépend notamment du nombre maximum d'aéronefs visibles dans la zone de couverture du satellite. Afin de dimensionner le système, l'homme du métier peut utiliser des modèles de trafic aérien.

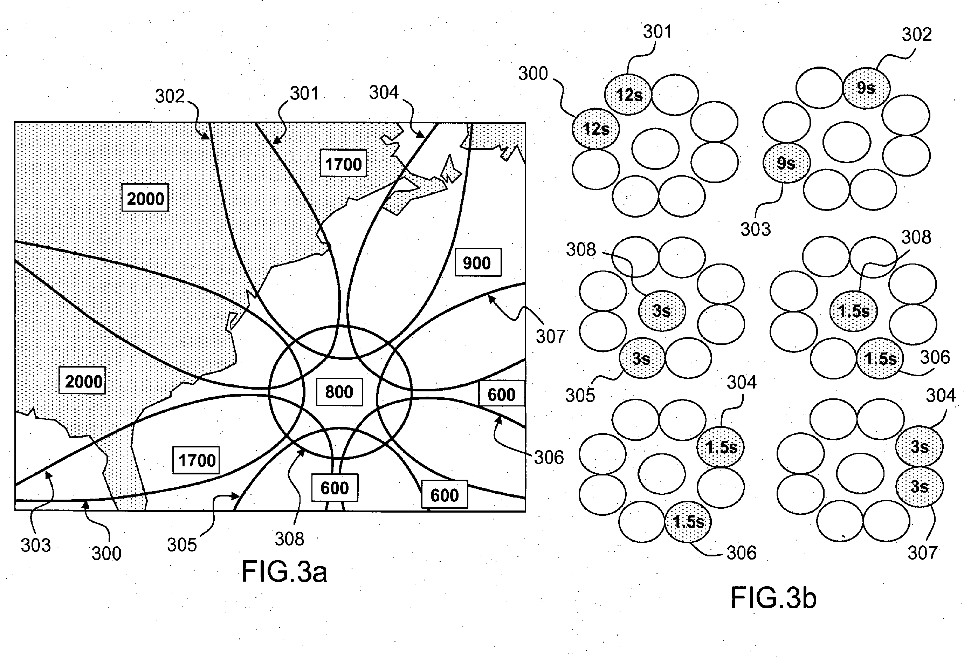

La figure 3a donne un exemple de zone pouvant être couverte par un satellite multi-spots mettant en oeuvre une séquence de commutation de faisceaux irrégulière. Dans cet exemple, neufs spots ont été considérés. La densité d'aéronef est différente dans chacun de ces spots. Ainsi, deux spots 300, 301 doivent permettre la réception de messages de surveillance en provenance de deux mille aéronefs en moyenne, deux autres spots 302, 303 doivent permettre la réception de messages de surveillance en provenance de mille sept-cents aéronefs en moyenne, deux autres spots 304, 308 doivent permettre la réception de messages de surveillance en provenance de neuf cents aéronefs, quatre autres spots 305, 306, 307 doivent permettre la réception de messages de surveillance en provenance de six cents aéronefs.

La figure 3b donne un exemple de séquence de commutation irrégulière.

Une séquence de commutation est composée de plusieurs phases de commutation. Une phase de commutation correspond à une plage temporelle durant laquelle le dispositif de réception embarqué dans le satellite écoute au moins un spot. La somme des durées des phases de commutation composant la séquence est appelée période de commutation. Une séquence est dite irrégulière lorsqu'au moins deux phases de commutation ont des durées différentes.

Les spots et leurs densités associées sont identiques à ce qui est décrit à l'aide de la figure 3a. Dans cet exemple, il est pris comme hypothèse que le satellite embarque deux modules de réception 207, 208. Ainsi, ledit satellite a la capacité de traiter simultanément les signaux en provenance de deux spots. La séquence de commutation comprend les phases de commutation suivantes:

- la réception 309 pendant douze secondes des signaux en provenance des spots 300 et 301 ;
- la réception 310 pendant neuf secondes des signaux en provenance des spots 302 et 303 ;
- la réception 311 pendant trois secondes des signaux en provenance des spots 305 et 308 ;
- la réception 312 pendant une seconde et demie des signaux en provenance des spots 306 et 308 ;
- la réception 313 pendant une seconde et demie des signaux en provenance des spots 304 et 306 ;
- la réception 314 pendant trois secondes des signaux en provenance des spots 304 et 307.

Le temps d'écoute total alloué pour chaque spot est choisi de manière à tenir compte de la densité de présence d'aéronefs dans les spots. Dans cette exemple, les durées des phases de commutation sont déterminée de manière à ce qu'au moins une seconde soit allouée pour deux cents aéronefs présents dans le spot. Ainsi, pour un spot comprenant neuf cents aéronefs, une phase de commutation d'une durée égale à au moins quatre secondes et demi sera choisie. En effet, plus la densité d'aéronefs est importante, plus la probabilité de collision entre des messages provenant de différents aéronefs est grande. En conséquence, le temps d'écoute doit être augmenté de manière à s'assurer que les messages de surveillance soient bien reçus tout en respectant la contrainte de la période *Tup* = 30*s*. Dans l'exemple de la figure 3, la période de commutation *Tcom*, c'est-à-dire la somme des six phases de commutation, est égale à trente secondes. La contrainte de la période *Tup* est donc respectée. A noter que pour le spot 308, le temps d'écoute alloué par période de commutation *T com* est de quatre secondes et demi atteintes en deux phases de commutation, une première phase de trois secondes et une seconde phase d'une seconde et demi.

La séquence de commutation peut être adaptée automatiquement au fil du temps de manière à tenir compte des variations de trafic et donc de la densité d'aéronefs présents dans chaque spot. Les mécanismes classiques de supervision du démodulateur d'un satellite permettent de connaître le nombre d'aéronefs dans chaque spot. En fonction de cette information, la séquence peut être automatiquement modifiée en utilisant un algorithme embarqué dans le satellite.

L'adaptation automatique de la séquence peut être réalisée en utilisant le résultat produit par un module de supervision du démodulateur. Ce module embarqué dans le dispositif de réception a pour fonction de produire un indicateur représentatif du nombre d'aéronefs présents dans chaque spot. Cet indicateur peut être déterminé de la manière suivante :

- Pour un spot pour lequel le temps d'écoute n'est pas suffisamment long, le récepteur n'arrivera pas à démoduler tous les messages. Dans ce cas, un modèle statistique peut être utilisé pour estimer le nombre d'aéronefs présents dans le spot.
- Pour un spot dans lequel la durée d'écoute est trop longue, tous les messages sont correctement démodulés et le nombre d'aéronefs peut être obtenu directement sur cette base.

Dans un mode de réalisation alternatif, une nouvelle séquence de commutation peut être déterminée à partir d'une station au sol, ladite station transmettant cette séquence au satellite en utilisant un message de signalisation de manière à ce que le satellite la mette en oeuvre

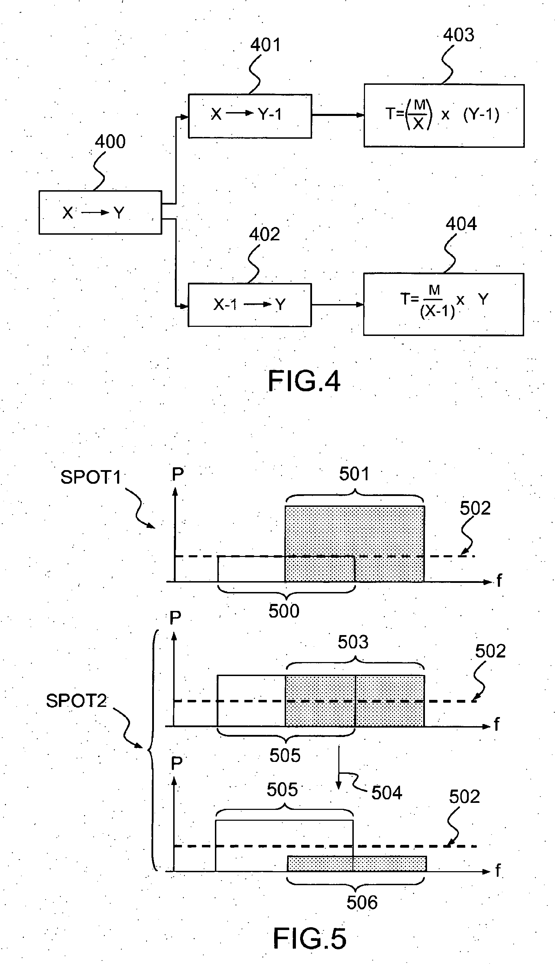

La figure 4 illustre la manière dont une séquence de commutation peut être adaptée automatiquement de manière à prendre en compte une défaillance d'un ou plusieurs modules de réception.

Ainsi, si X faisceaux sont traités par Y modules de réception 400, deux situations 401, 402 peuvent être rencontrées

Une première situation 401 correspond au cas où l'un des modules de réception est hors de service. Une telle défaillance peut être prise en compte pour garder le système opérationnel si le dispositif de réception comprend au moins *Y*≥ 2 modules de réception. Il reste donc Y-1 modules de réception en état de fonctionner. Ainsi, les X faisceaux devront être traités par ces Y-1 modules. En conséquence, le temps d'écoute *Tsc* par faisceau devra être proportionnellement diminué 403. Dans l'hypothèse où le temps d'écoute est le même pour chaque spot, celui-ci pourra être adapté automatiquement en utilisant l'expression suivante :

$$Tsc = \left(\frac{Tcom}{x}\right) \times (Y-1) \qquad (1)$$

Une seconde situation 402 correspond au cas où l'un des faisceaux n'est plus reçu. Cela peut être du à un changement de topologie du système ou à cause d'une défaillance d'une chaîne de traitement d'antenne 209 ou du commutateur 205. Il reste donc X-1 faisceaux à traiter. Ainsi, les X faisceaux devront être traités par ces Y-1 modules. En conséquence, le temps d'écoute par faisceau *Tec*, c'est-à-dire la durée des phases de commutation si un faisceau n'est traité qu'une fois par phase, devra être proportionnellement augmenté 404. Dans l'hypothèse où le temps d'écoute est la même pour chaque spot, la séquence de commutation pourra être adaptée automatiquement en utilisant l'expression suivante :

$$Tec = \frac{Tcom}{(x-1)} \times Y \qquad (2)$$

En prenant l'exemple d'un satellite ADS-B, le temps d'écoute par faisceaux avec deux modules de réception est de $Tec = (Tcom/X) \times Y = (30/9) * 2 = 6.6s$.

Si l'un des modules de réception est hors service, le temps d'écoute sera adapté automatiquement de manière à avoir $Tec = (30/9) * 1 = 3.3s$.

Si un faisceau ne peut être reçu, le temps d'écoute sera adapté automatiquement de manière à avoir $Tec = (30/8) * 2 = 7.5s$.

Dans le cas où la réception de l'un des faisceaux n'est plus possible, un temps d'écoute $Tec$ identique pour chaque spot peut être mis en oeuvre lors de l'adaptation de la séquence d'étalement, comme décrit précédemment.

Dans un mode de réalisation alternatif, la séquence de commutation peut être adaptée de manière à ce que le temps d'écoute $Tec$ soit augmenté plus significativement pour les spots adjacents au faisceau défaillant que pour les autres. Cela a pour avantage d'augmenter la probabilité de réception de messages en provenance de la zone couverte par spot défaillant, les spots adjacents se recouvrant à leur bordure.

La figure 5 illustre comment des techniques de détection multi-utilisateurs peuvent être utilisées dans le cadre de l'invention.

Les techniques multi-utilisateurs désignées habituellement par l'acronyme MUD venant de l'expression anglo-saxonne « Multi-User Detection » peuvent être avantageusement mises en oeuvre dans le cadre de l'invention. Si un premier et un second aéronef émettent respectivement un premier 500 et un second 501 message de surveillance simultanément et sur des bandes de fréquence se recouvrant, la technique MUD peut permettre de démoduler et de décoder correctement ces deux messages. A titre d'exemple, si dans un premier spot SPOT1, le second signal portant le second message 501 est reçu avec une puissance au moins égale au seuil de sensibilité 502 du récepteur et que le premier signal portant le premier message 500 est reçu avec une puissance inférieure à ce seuil, il est alors possible pour le dispositif de réception de démoduler et de décoder le second message mais pas le premier message. Dans un spot adjacent SPOT2, les deux signaux 500, 501 peuvent être reçus avec une même puissance et donc interférer l'un avec l'autre. Cela peut avoir pour conséquence une mauvaise détection des deux messages. La technique MUD permet d'utiliser le résultat de la détection du second message 501 dans le spot SPOT1 de manière à soustraire 504 l'interférence 503 correspondant à ce second message dans le SPOT2 et ainsi de permettre de détecter le premier message 505, l'interférence résiduelle 506 après soustraction du second signal 505 étant alors suffisamment faible pour permettre cette détection.

Dans les systèmes de type ADS-B, les aéronefs émettent en polarisation verticale par rapport au référentiel de l'aéronef, l'horizontale étant définie par le plan comprenant les ailes dudit aéronef. Les antennes de réceptions des satellites fonctionnent quant à elles en polarisation circulaire. Une perte de puissance théorique de 3 décibels due à la désadaptation des polarisations doit donc être prise en compte.

En réalité, du fait des caractéristiques des antennes d'émission, la polarisation du signal émis est elliptique. Les mouvements de l'aéronef ainsi que cette ellipticité induisent une perte en puissance de réception inférieure ou égale à trois décibels dans une des polarisations circulaires et une perte en puissance de réception supérieure ou égale à trois décibels dans l'autre.

Dans un mode de réalisation préféré, les antennes de réception du satellite sont configurées de manière à ce si deux antennes sont utilisées pour recevoir des signaux en provenance de deux spots adjacents, la première fonctionne en polarisation circulaire droite et la seconde en polarisation circulaire gauche. Ainsi, lorsqu'un signal portant un message de signalisation est reçu par deux antennes associées à deux spots adjacents, le signal de plus forte puissance est sélectionné pour le traitement par les modules de réception. La probabilité de détection des messages de surveillance s'en trouve améliorée significativement, en particulier pour les aéronefs situés dans des zones de recouvrement entre spots adjacents.

Dans un mode de réalisation alternatif, au moins une des antennes du satellite fonctionne à la fois en polarisation circulaire droite et en polarisation circulaire gauche.

## Revendications

**1.** Dispositif de réception apte à être embarqué dans un satellite comprenant :

- des moyens de formation de faisceaux (200, 203) pour former une pluralité de faisceaux de réception, un faisceau de réception correspondant à un spot, l'ensemble des spots formant une zone de couverture,
- au moins un module de réception (207, 208) comportant des moyens pour détecter des messages de surveillance à partir d'un faisceau de réception, **caractérisé en ce que** le dispositif comprend en outre
- des moyens de commutation (205) pour mettre en oeuvre périodiquement une séquence de commutation permettant de commuter au moins un faisceau de réception vers au moins un module de réception, ladite séquence étant adaptée de manière à permettre la détection pendant une période prédéterminée $Tup$ d'au moins un message de surveillance par aéronef présent dans la zone de couverture, ladite séquence étant en outre composée d'une pluralité de phases de commutation, une phase de commutation correspondant à une durée pendant laquelle les signaux émis par des aéronefs présents dans au moins un spot sont traités dans le au moins un module de réception de manière à détecter des messages de surveillance *Tup*.

2. Dispositif de réception selon la revendication 1 comprenant au moins deux modules de réception (207, 208).

3. Dispositif de réception selon la revendication 2 dans lequel lorsqu'un module de réception (207, 208) est hors service, le temps d'écoute *Tec* par faisceau correspondant au temps alloué à la détection de messages de surveillance pendant une application de la séquence de commutation est proportionnellement diminué (403).

4. Dispositif de réception selon l'une des revendications précédentes dans lequel lorsque l'un des faisceaux est défaillant, la séquence de commutation est adaptée de manière à ce que le temps d'écoute par faisceau soit augmenté pour les faisceaux restants.

5. Dispositif de réception selon la revendication 4 dans lequel le temps d'écoute par faisceau est augmenté de manière plus significative pour les spots adjacents au faisceau défaillant que pour les autres.

6. Dispositif de réception selon l'une des revendications précédentes dans lequel la norme ADS-B est mise en oeuvre.

7. Dispositif de réception selon l'une des revendications précédentes dans lequel la séquence de commutation comprend au moins deux phases de commutation de durées différentes.

8. Dispositif de réception selon l'une des revendications précédentes dans lequel la séquence de commutation est adaptée automatiquement et/ou sur commande en fonction de la densité des aéronefs présents dans les spots de la zone de couverture.

9. Dispositif de réception selon l'une des revendications précédentes dans lequel la durée des phases de commutation et/ou le nombre de spots traités durant chaque phase sont choisis en fonction de la densité des aéronefs présents dans lés spots de la zone de couverture.

10. Dispositif de réception selon l'une des revendications précédentes comprenant des moyens de détection multi-utilisateurs MUD par suppression d'interférence, la contribution au signal reçu dans un spot d'un message détecté étant retranchée aux signaux reçus dans les spots adjacents traités pendant la même phase de commutation.

11. Dispositif de réception selon l'une des revendications précédentes comprenant une pluralité d'antennes de réception, deux antennes utilisées pour recevoir des signaux en provenance de deux spots adjacents étant configurées de manière à ce que la première fonctionne en polarisation circulaire droite et la seconde en polarisation circulaire gauche.

12. Dispositif de réception selon l'une des revendications 1 à 10 comprenant une pluralité d'antennes de réception, au moins une antenne étant configurée de manière à ce qu'elle fonctionne à la fois en polarisation circulaire droite et en polarisation circulaire gauche.

13. Système de surveillance d'aéronefs comprenant au moins un satellite de communication (102) et une pluralité d'aéronefs (100, 101) émettant (104) des signaux portant des messages de surveillance, le satellite (102) comprenant un dispositif de réception selon l'une des revendications précédentes.

**Patentansprüche**

1. Empfangsvorrichtung, die imstande ist, in einen Satelliten eingebaut zu sein, umfassend:

- Strahlbildungsmittel (200, 203), um eine Vielzahl von Empfangsstrahlen zu bilden, wobei ein Empfangsstrahl einem Spot entspricht, wobei die Gesamtheit der Spots einen Deckungsbereich bildet,
- mindestens ein Empfangsmodul (207, 208), das Mittel umfasst, um Überwachungsmeldungen von einem Empfangsstrahl zu orten, **dadurch gekennzeichnet, dass** die Vorrichtung ferner umfasst:
- Umschaltmittel (205), um periodisch eine Umschaltsequenz durchzuführen, was erlaubt, mindestens einen Empfangsstrahl zu mindestens einem Empfangsmodul umzuschalten, wobei die Sequenz derart angepasst ist, dass die Ortung während einer vorbestimmten Periode *Tup* mindestens einer Überwachungsmeldung je Luftfahrzeug zu erlauben, das im Deckungsbereich vorhanden ist, wobei die Sequenz ferner aus einer Vielzahl von Umschaltphasen zusammengesetzt ist, wobei eine Umschaltphase einer Dauer entspricht, während der die von Luftfahrzeugen, die in mindestens einem Spot vorhanden sind, in dem mindestens einem Empfangsmodul derart verarbeitet werden, dass Überwachungsmeldungen *Tup* geortet werden.

2. Empfangsvorrichtung nach Anspruch 1, die mindestens zwei Empfangsmodule (207, 208) umfasst.

3. Empfangsvorrichtung nach Anspruch 2, wobei, wenn ein Empfangsmodul (207, 208) außer Betrieb ist, die Abhörzeit *Tec* je Strahl der Zeit, die der Ortung von Überwachungsmeldungen während einer Anwendung der Umschaltsequenz entspricht, proportional verringert (403) ist.

4. Empfangsvorrichtung nach einem der vorangehenden Ansprüche, wobei, wenn einer der Strahlen ausfällt, die Umschaltsequenz derart angepasst ist, dass die Abhörzeit je Strahl für die verbliebenen Strahlen erhöht ist.

5. Empfangsvorrichtung nach Anspruch 4, wobei die Abhörzeit je Strahl für die Spots, die dem ausgefallenen Strahl benachbart sind, signifikanter als für die anderen erhöht ist.

6. Empfangsvorrichtung nach einem der vorangehenden Ansprüche, wobei die Norm ADS-B umgesetzt wird.

7. Empfangsvorrichtung nach einem der vorangehenden Ansprüche, wobei die Umschaltsequenz mindestens zwei Umschaltphasen unterschiedlicher Dauern umfasst.

8. Empfangsvorrichtung nach einem der vorangehenden Ansprüche, wobei die Umschaltsequenz automatisch und/oder auf Befehl in Abhängigkeit von der Dichte der in den Spots des Deckungsbereichs vorhandenen Luftfahrzeuge angepasst ist.

9. Empfangsvorrichtung nach einem der vorangehenden Ansprüche, wobei die Dauer der Umschaltphasen und/oder die Anzahl der während jeder Phase verarbeiteten Spots in Abhängigkeit von der Dichte der in den Spots des Deckungsbereichs vorhandenen Luftfahrzeuge gewählt sind.

10. Empfangsvorrichtung nach einem der vorangehenden Ansprüche, die Multi-User-Ortungsmittel MUD durch Interferenzunterdrückung umfasst, wobei der Beitrag zum in einem Spot einer georteten Nachricht empfangenen Signal von den in den benachbarten Spots empfangenen Signalen abgezogen wird, die während derselben Umschaltphase verarbeitet werden.

11. Empfangsvorrichtung nach einem der vorangehenden Ansprüche, die eine Vielzahl von Empfangsantennen umfasst, wobei zwei Antennen verwendet werden, um Signale von zwei benachbarten Spots zu empfangen, die derart konfiguriert sind, dass die erste in rechtsdrehender Zirkularpolarisation und die zweite in linksdrehender Zirkularpolarisation funktioniert.

12. Empfangsvorrichtung nach einem der Ansprüche 1 bis 10, die eine Vielzahl von Empfangsantennen umfasst, wobei mindestens eine Antenne derart konfiguriert ist, dass sie gleichzeitig in rechtsdrehender Zirkularpolarisation und in linksdrehender Zirkularpolarisation funktioniert.

13. Luftfahrzeug-Überwachungssystem, das mindestens einen Kommunikationssatelliten (102) und eine Vielzahl von Luftfahrzeugen (100, 101) umfasst, die Signale senden (104), die Überwachungsmeldungen tragen, wobei der Satellit (102) eine Empfangsvorrichtung nach einem der vorangehenden Ansprüche umfasst.

**Claims**

1. A reception device designed to be placed on board a satellite, comprising:

   - beam forming means (200, 203) for forming a plurality of reception beams, with a reception beam corresponding to a spot, all of the spots forming a coverage area;
   - at least one reception module (207, 208) comprising means for detecting surveillance messages from a reception beam, **characterised in that** said device further comprises:
- switching means (205) for periodically implementing a switching sequence allowing at least one reception beam to be switched to at least one reception module, said sequence being designed so as to allow the detection, during a predetermined period $Tup,$ of at least one surveillance message per aircraft present in the coverage area, said sequence also being composed of a plurality of switching phases, with a switching phase corresponding to a duration during which the signals transmitted by aircraft present in at least one spot are processed in the at least one reception module so as to detect surveillance messages $Tup.$

2. The reception device according to claim 1, comprising at least two reception modules (207, 208).

3. The reception device according to claim 2, wherein, when a reception module (207, 208) is disabled, the listening time $Tec$ per beam, which corresponds to the time assigned to the detection of surveillance messages when applying said switching sequence, is proportionally reduced (403).

4. The reception device according to any one of the preceding claims, wherein, when one of the beams is defective, the switching sequence is designed so that the listening time per beam is increased for the remaining beams.

5. The reception device according to claim 4, wherein the listening time per beam is increased more significantly for the spots adjacent to the defective beam than for the other spots.

6. The reception device according to any one of the preceding claims, wherein standard ADS-B is implemented.

7. The reception device according to any one of the preceding claims, wherein said switching sequence comprises at least two switching phases with different durations.

8. The reception device according to any one of the preceding claims, wherein said switching sequence is adapted automatically and/or on command as a function of the density of the aircraft present in the spots of the coverage area.

9. The reception device according to any one of the preceding claims, wherein the duration of the switching phases and/or the number of spots processed during each phase is/are selected as a function of the density of aircraft present in the spots of the coverage area.

10. The reception device according to any one of the preceding claims, comprising means for multi-user detection MUD by interference suppression, with the contribution to the signal received in a spot of a detected message being deducted from the signals received in the adjacent spots processed during the same switching phase.

11. The reception device according to any one of the preceding claims, comprising a plurality of reception antennae, with two antennae used to receive signals coming from two adjacent spots being configured so that the first antenna operates by right-hand circular polarisation and the second antenna operates by left-hand circular polarisation.

12. The reception device according to any one of claims 1 to 10, comprising a plurality of reception antennae, with at least one antenna being configured so that it operates both by right-hand circular polarisation and by left-hand circular polarisation.

13. A system for monitoring aircraft, comprising at least one communication satellite (102) and a plurality of aircraft (100, 101) transmitting (104) signals carrying surveillance messages, said satellite (102) comprising a reception device according to any one of the preceding claims.

FIG.1

FIG.2

EP 2 590 341 B1

FIG.3a

FIG.3b

EP 2 590 341 B1

401

400

$$X \longrightarrow Y-1$$

$$X \longrightarrow Y$$

403

$$T = \left(\frac{M}{X}\right) \times (Y-1)$$

402

$$X-1 \longrightarrow Y$$

404

$$T = \frac{M}{(X-1)} \times Y$$

## FIG.4

SPOT1

P

501

502

500

P

503

502

505

SPOT2

504

P

505

502

506

## FIG.5

**EP 2 590 341 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2296128 A